# EUROPEAN PATENT APPLICATION

(11) **EP 1 255 203 A2**
(43) Date of publication of application: **06.11.2002**
(21) Application number: 02009458.7
(22) Date of filing: 25.04.2002
(51) Int. Cl.: G06F 17/00, A63F 13/12, G10L 21/00

(54) **Altering network transmitted content data based upon user specified characteristics**

(30) Priority: 30.04.2001 US 846115
(71) Applicant: Sony Computer Entertainment America, Inc., Foster City, CA 94404 (US)
(72) Inventor: Chatani, Masayuki, c/oSony Comp.Entert.America Inc, Foster City, California 94404-2175 (US)
(74) Representative: Müller - Hoffmann & Partner

(57) **Abstract**

A system for converting content data transmitted over a computer network (110) from a first computer (104) to a second computer (102) is disclosed. Content data comprising text or audio data is input into the first computer (104). The content data is digitized to produce digitized content data. If the content data comprises audio data, the data is digitized through a speech to text process. Parameters controlling the modification of the digitized content data are received from a user of a second computer (102). The parameters are input into a graphical user interface provided for the user and dictate output voice characteristics such as, gender, expression, accent, and language. The digitized content data is altered in accordance with the content data output characteristics specified by the user, and then provided to the second computer (102) for output as modified voice data.

## Description

The present invention relates generally to computer networks, and more specifically, to a system for transforming or modifying data transmitted over a network through characteristics specified by a user.

The basic functions of a computer network are to transmit, exchange or store data transmitted among computers coupled to the network. Most network implementations use a computer network simply as a point-to-point system to route and channel data or information among the networked computers. Some processes, such as compression or encryption techniques that speed transmission rates or enhance transmission security may be implemented on the transmitted data. In general, however, relatively little processing is performed on most data once it is transmitted from the sending computer. Data is typically processed at the sending computer and transmitted to the receiving terminal in its processed form. Standard network communication systems therefore do not provide flexibility or opportunity for a receiver or third party to transform, modify, alter or process the data according to the receiving party's needs.

Some present computer systems are used for network game or other application, however, these computer systems typically do not provide effective mechanisms in which the relative location of various users is reflected in the audio output of characters representing the users in a networked game or other application.

What is needed, therefore, is a system that allows transmitted data to be modified or altered according to a receiver's needs after it has been generated and transmitted by a sending computer.

It is an object of embodiments of the present invention to provide an improved content data output system that enhances interactive computer applications, such as networked games and chat applications.

It is a further object of embodiments of the present invention to provide content data output that reflects the relative physical location of users as they are distributed in the network (110).

A system including means (202, 312) for modifying content data is disclosed. In this system, the data is transmitted over a bi-directional communication network (110) from a first computer (104) to a second computer (102). If the content data comprises audio data, The means (202, 312) for modifying content data digitize the audio data through a speech to text process etc.. In addition, the means (202, 312) for modifying content data receives parameters controlling the modification of the digitized content data from a user of a second computer (102), and modifies, based on these parameters, characteristics such as, gender, expression, accent, and language. The modified content data is output in a configuration or format based on the output characteristics from an output mechanism connected to the second computer (102). In one embodiment, the relative location information of the users in a bi-directional communication network (110) is detected. This detected location information is used to further modify the output configuration or format of the voices etc. from characters representing (or related to) the users.

Other objects, features, and advantages of the present invention will be apparent from the accompanying drawings and from the detailed description that follows below.

The present invention is illustrated by way of example and not limitation in the figures of the accompanying drawings, in which like references indicate similar elements, and in which:
Figure 1 illustrates a block diagram of a computer network system that implements embodiments of the present invention;
Figure 2 illustrates a block diagram of a network that includes a content data conversion process for text data, according to an embodiment of the present invention;
Figure 3 illustrates a block diagram of a network that includes a content data conversion process for voice data, according to an embodiment of the present invention;
Figure 4 is a flow diagram illustrating the processing of data through the voice conversion process illustrated in Figure 3, according to one embodiment of the present invention;
Figure 5 illustrates a character profile setup input screen displayed in a graphical user interface system, according to one embodiment of the present invention;
Figure 6 illustrates a networked game environment in which user game consoles communicate over a network, according to one embodiment of the present invention; and
Figure 7 illustrates a networked game environment in which user game consoles communicate over a network, according to an alternative embodiment of the present invention.

A computer system having a mechanism (202, 312) for modifying downloaded content which is transmitted through a network and downloaded by a receiving computer is described. In the following description, for purposes of explanation, numerous specific details are set forth in order to provide a thorough understanding of the present invention. It will be evident, however, to one of ordinary skill in the art, that the present invention may be practiced without these specific details. In other instances, well-known structures and devices are shown in block diagram form to facilitate explanation. The description of preferred embodiments is not intended to limit the scope of the claims appended hereto.

The computer system of the present invention may be implemented on one or more computers executing software instructions. According to an embodiment which employ a plurality of computers, it is desirable to implement the present invention as a computer system having server computer (hereinafter referred as "server") and client computer (hereinafter referred as "client"). In the computer system of this embodiment, the data are interactively transmitted and received over a computer network or standard telephone line such as LAN or internet. The processing steps including steps of accessing, downloading, and manipulating the content data are implemented by a central processing unit (CPU), according to instructions or sequence of instructions (hereinafter referred as "instruction") stored in a memory in each computer, of the computer. The CPU is installed in each computer of the server and client with its memory. The memory may be a random access memory (RAM), read-only memory (ROM), a persistent store, such as a mass storage device, or any combination of these devices.

The instructions may be loaded into the memory of the server or client computers from a storage device or from one or more other computer systems via a bi-directional communication network. For example, a client computer may transmit instructions to the server in response to a message transmitted to the client over a bi-directional communication network by the server. In this case, the server stores the received instructions in a memory. The server may store the instructions for later execution, or it may store the instructions for executing the instructions as they arrive over the bi-directional communication network connection. In some cases, the stored instructions may be directly supported by the CPU. In other cases, the instructions may not be directly executable by the CPU, and may instead be executed by an interpreter that interprets the instructions. In other embodiments, electrical circuitry may be used in place of, or in combination with, software instructions to implement the present invention. Thus, the present invention is not limited to any specific combination of hardware circuitry and software, nor to any particular source for the instructions executed by the server or client.

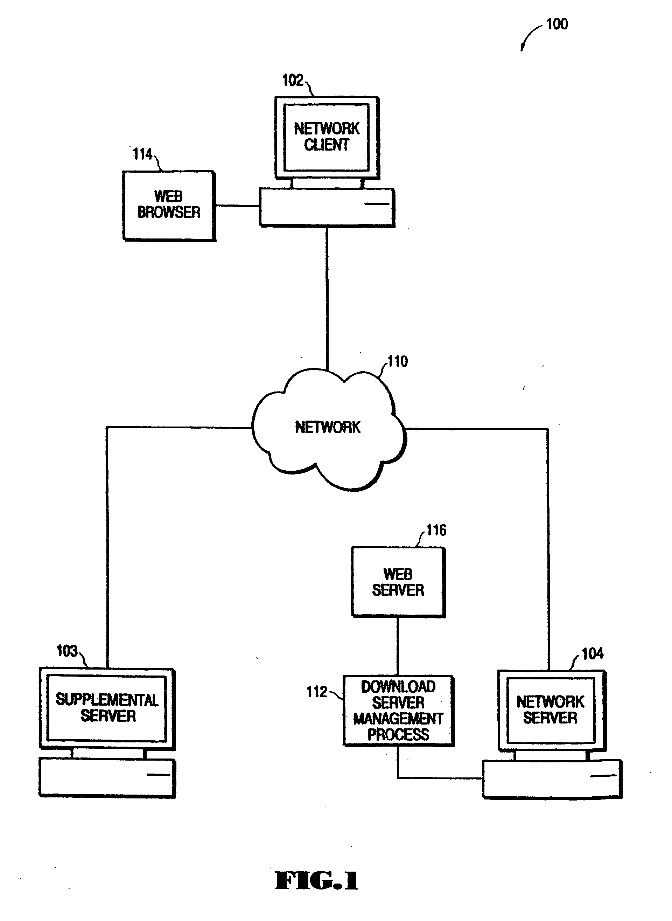

Figure 1 is a block diagram of a computer system according to one embodiment of the present invention. The computer system 100 of Figure 1 enables the transmission and conversion of content data. The term "content data" in the context of the specification and claims shall be understood to refer to any type data which can be transmitted among the computers and can be downloaded by a receiving side computer. Such content data may consist of any one of text data, video linear streaming data, such as motion picture data in MPEG or MPEG2 format; linear audio streaming data, such as music data in MP3 format; binary program data; voice data; or any combination of such data or similar data. In general, content data does not include computer program or data that are used solely to provide access to a network, such as browser software or protocol handlers whose main function is only to establish a network connection.

Figure 1 illustrates a computer system 100 that implements one or more embodiments of the present invention. In the computer system 100, a network server computer 104 is coupled, directly or indirectly, to one or more client 102 through a network 110. The network interface between server 104 and client 102 may also include one or more routers. The routers serve to buffer and route the data transmitted between the server 104 and client 102. Network 110 may be the Internet, a Wide Area Network (WAN), a Local Area Network (LAN), intranet, extranet, wireless network, or any combination thereof.

The server 104 is a World-Wide Web (WWW) server that stores data in the form of 'web pages' and transmits these pages as Hypertext Markup Language (HTML) files over the network 110 to one or more of the client 102. The client 102 can run a "web browser" program 114 to access the web pages served by server 104. Additional web based content data can be provided to client 102 by separate content providers, such as supplemental server 103.

The server 104 executes a download service management process 112 that is configured to handle download requests from a user operating client 102. When the user sends a request to a download management process 112, access to the server 104, which may comprise one of several servers, is facilitated typically through a router on network 110. When the server 104 receives such a request from a user, the server executes a process for enabling the client, which sent the request, to download the requested content data from a content database. The requested data is internally generated within the server or stored in a content database which is provided externally to the server. Along with processing requests for downloading of content data, the server 104 may also retrieve the requesting user's customer data from a customer database, which is provided in the server or provided externally to the server, and attach it to the requested primary contents or use it to modify content or transmission parameters for particular users. The content data are then transmitted to the client 102 via the network 110 by means of a known networking protocol standard, such as the file transfer protocol (ftp).

In the present embodiment wherein network 110 is the Internet, the server 104 also executes a web server process 116 to provide a HTML file or document to client 102 coupled to network 110. To access the HTML files provided by server 104, client 102 runs a web client process (typically a web browser) 114 that accesses and provides links to web pages available on server 104 and other Internet sites. It should be noted that the computer system 100 that implements this embodiments may include a larger number of interconnected client and server than shown in Figure 1.

The network 110 is normally a bi-directional digital communications network that connects the hardware of client 102 with the download management process 112 provided on the server 104. With current technologies, a CATV (cable television) bi-directional, ISDN (Integrated Services Digital Network), DSL (Digital Subscriber Line), or xDSL high-speed networks are examples of existing network infrastructures enabling the necessary network connections for implementing embodiments of the present invention.

The client 102 may comprise a personal computer that includes a modem or network adapter, or it may comprise a networked game console (entertainment system), which is connected to the above personal computer or directly connected to the network and utilizes a detachable storage medium therein. Further, the client may comprise a TV monitor or any other suitable display device and audio device such as a speaker. The modem or network adapter is a device that is used to connect the hardware, e.g., a game console, for connection to the network 110. For example, if network 110 is a CATV network, a cable modem device is used; and if network 110 is an ISDN network, a terminal adapter is used.

The server 104 can supply content data such as voice data, music clips, full-length audio and video programs, movies, still picture data, and other similar types of content. The content data might further comprise promotional or advertising data associated with the primary content, such as movie previews, demo games, sample data, and other similar types of content.

In this embodiment, computer system 100 includes a conversion system as conversion means. The conversion system modifies or processes the data transmitted from the server 104 to the client 102 to improve the user interface and quality of entertainment. For the embodiment in which the transmitted data comprises audio data, the conversion system is a voice modifying system. This voice modifying system can be used in various IP telephony, network chat, video game, or 3D virtual chat applications, among others.

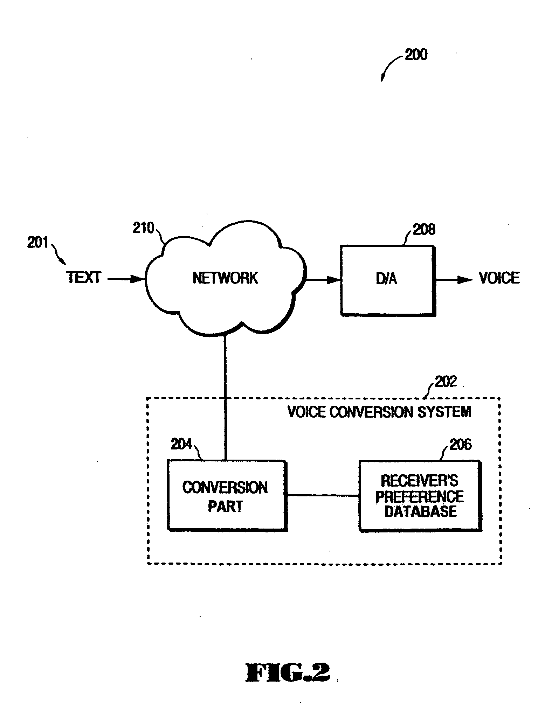

Figure 2 illustrates a block diagram of the voice modifying system. In Figure 2, the transmitted content data is text data 201 generated by a server and transmitted to a client having an audio player over a network 210. The text data 201 is converted into audio output data through a digital-to-analog (D/A) converter 208 coupled to the client, and the text data 201 is output. The audio conversion system 202 includes a conversion part 204 as conversion means, and a receiver preference database 206. Typically, the audio conversion system 202 is installed within the client, however, it may be installed within a separate computer or other computer coupled to the network.

The conversion part 204 includes circuits that convert the input text data 201 to output data, or the conversion system executes a process that convert the input text data 201 to output data, as well as a process that modify or transform the characteristics of the text data 201. For example, for audio output, the conversion system can be executed to represent various characteristics such as, tone, accents, intonation, and effects, such as echo, reverberation, and so on. For speech output, the conversion part 204 can represent characteristics such as language, dialect, expression, and so on. In this case, the conversion part 204 may include a translator that translates speech in one language to another language. The conversion part 204 can also execute processes that mimic the voice characteristics of well-known characters or personalities.

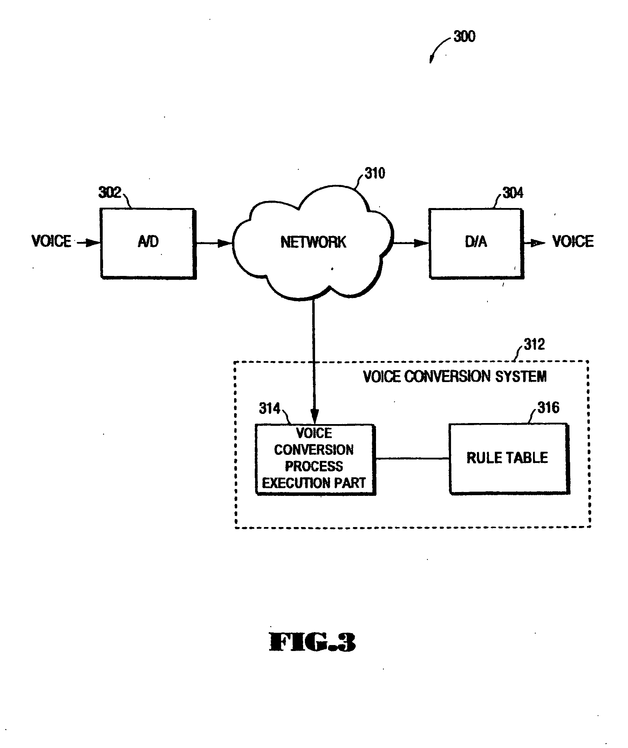

Figure 3 illustrates another block diagram of a network that includes a audio conversion system for content data that comprises voice data. For the audio conversion system 312 in Figure 3, the transmitted content data comprises voice data generated by a server and transmitted to a client over a network 310.

The audio data is the data which is input via sound input apparatus such as microphone connected to the server. The audio data may be the data converted from text data which is basic data for composite tone.

The digitized voice data is transmitted over network 310 for conversion by voice conversion system 312.

In the server, the voice portion of the content data to be transmitted can be changed and sent to other assigned user(s) over the network using a protocol such as Voice over IP (VoIP). The voice conversion system 312 comprises voice conversion process executing part 314 as conversion process executing means which converts the voice data based on conversion rule stored in the rule table 316.For example, the voice conversion system 312 converts the voice based on various factors such as virtual character talk parameters, or user provided preferences. The converted voice data is transmitted to client. The client transforms the digitized voice data into analog voice through digital-to-analog (D/A) converter 304, and playback it with audio player such as loudspeaker. Alternatively, it is possible to provide the voice conversion system 312 at the client side, and transform the digitized voice data transmitted from A/D converter 302 into analog voice at its voice conversion system 312. Alternatively, the digitized voice data can be converted to analog form after output from the client computer through an external D/A converter. A D/A converter may be incorporated into audio player which is connected to client.

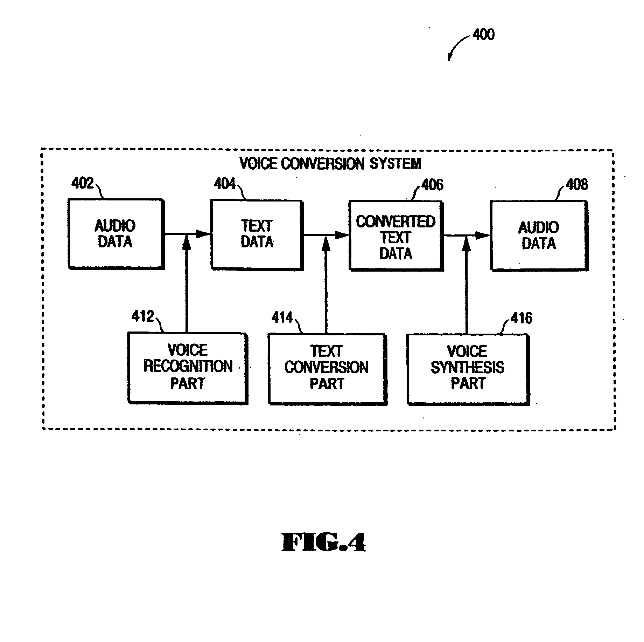

Figure 4 illustrates the basic flow of data conversion through the voice conversion system 312 illustrated in Figure 3. In flow diagram 400, audio data 402 represents data that is digitized and output from A/D converter after input into the server through an input device, such as a microphone. The audio data 402 is converted into text data 404 through a voice recognition process executing part 412 that converts digitized audio data to equivalent digital text data. The text data 404 is then adjusted by a text conversion process executing part 414 to produce adjusted text data 406. This adjusted text data 406 is then voice synthesized through a voice synthesis process executing part 416 to produce adjusted audio data 408. The adjusted audio data 408 is input to D/A converter 304 for conversion to analog voice to be output through speakers on the client computer.

The text conversion process executing part 414 includes several sub-processes that modify the original voice data to change the voice as it is played back on the client. Such modification can include modification of the original voice tone, accent, intonation, and so on. The text conversion process executing part 414 can also include processes that alter the substance of the input data, such as language translation (e.g., English-French) or dialect translation. The text conversion process can alter the expression of the original voice data. The expression can represent a character's personality or attribute (e.g., male or female or child speaker), character's circumstance or environment (e.g., in a tunnel, cave, etc.), the character's condition (e.g., excited, sad, injured, etc.). The text conversion process can also include special effects that alter the input voice data, such as Doppler effect, echo, and so on.

In one embodiment of the present invention, the characteristics that dictate how the voice data is converted are provided by a conversion rule table 316. The rule table316 specifies several parameters used by the voice conversion process executing part 314 that are used to modify the input voice data. The rule table 316 can include user provided character profiles as one of the above parameters. In one embodiment, the character profiles are entered by the user through a user interface provided on the client.

The character profile can be used to tailor the voice that a displayed character speaks with in bi-directional applications such as video games, educational programs, interactive applications, text-to-speech programs, and the like. The character talking voice is determined by fundamental parameters, such as frequency, waveform, etc.). The voice conversion process shapes the basic waveform to produce a converted voice that corresponds to the selected character profile. In one embodiment, a user can set the profile for the character.

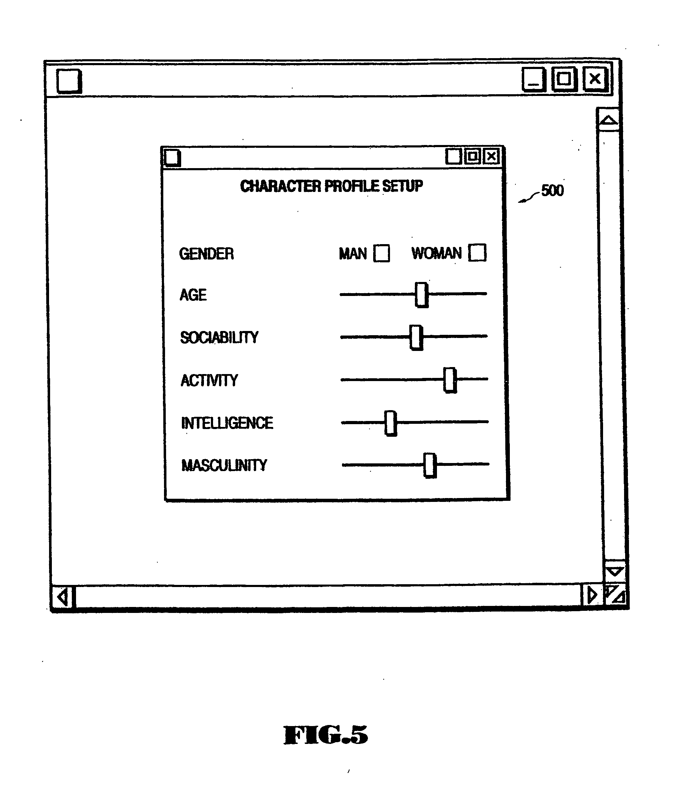

Figure 5 illustrates a graphical user screen that is displayed on a display of the client for input of a character profile. The window illustrated in the figure is hereinafter referred as "character profile set up display window". The character profile set up display window 500 includes several user selectable input fields that the user can change to alter the characteristics of the voice output. The user first selects the gender of the character that will recite the playback voice. As shown, the user can select a man's voice or a woman's voice. Other voice type characteristics can also be provided, such as child or baby. Various voice characteristics are also provided, such as age, sociability, activity, intelligence, and masculinity. Each of these characteristics shapes the voice playback parameters. For example, choosing an older age or increasing the masculinity generally lowers the voice. The sociability, activity, and intelligence characteristics generally affect how active and articulate the playback voice is portrayed.

For the embodiment illustrated in Figure 5, the user characteristics are displayed as bar slides that the user can move through an input device, such as a mouse, to select a relative value for the respective characteristic. It should be noted that various other input methods could be provided, such as numerical value entries, percentage value entries, and the like.

In an alternative embodiment, the character's talking voice can be created based on each pre-set character profile. For this embodiment, the above rule table 316 includes a user specified database that stores certain parameters or data entries for various variables of the voice data. For example, database parameters could include values that dictate the gender of the output voice, language, expression, and so on. Through the use of such a database, the voice data output on the client computer could, for example, be set to speak in English in a male voice with an English accent.

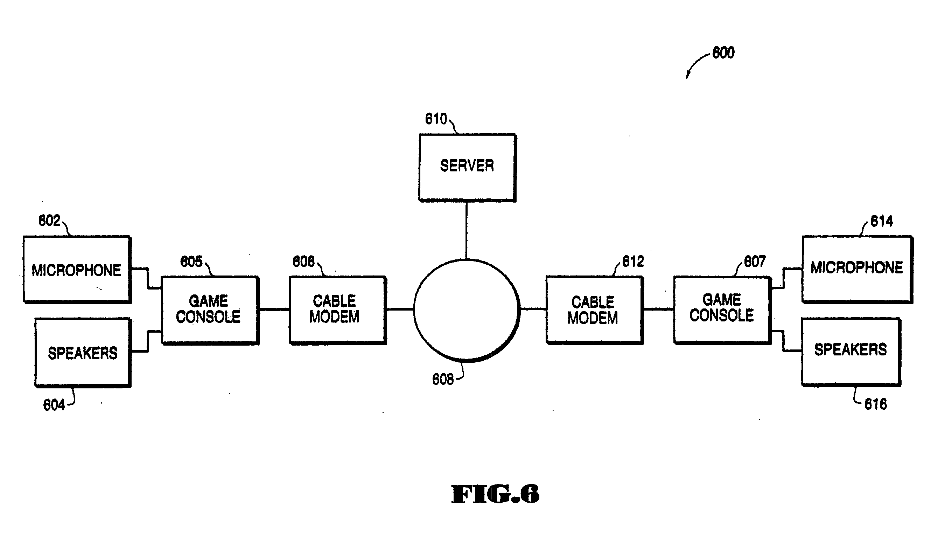

In one embodiment of the present invention, the voice conversion process can be implemented in a distributed interactive game system comprising a plurality of networked games coupled among two or more users. Figure 6 illustrates an example of a networked game system in which user game consoles (solely operating as a computer having communication function) communicate over a network, according to one embodiment of the present invention. A first game console 605 is coupled to network 608 through a cable modem 606. In this case, network 608 is typically a cable TV (CATV) network. Also coupled to game console 605 is a speaker pair 604 for voice output, and a microphone 602 for voice input. A second game console 607 is coupled to network 608 through a cable modem 612. A microphone 614 and speaker pair 616 is coupled to the second game console 607.

In the networked game system 600, a server 610 is coupled to network 608. The server 610 can perform a variety of functions, such as game monitoring a game executed on the game console 605 and 607, and providing game program or other application programs, managing user accounts, and the like.

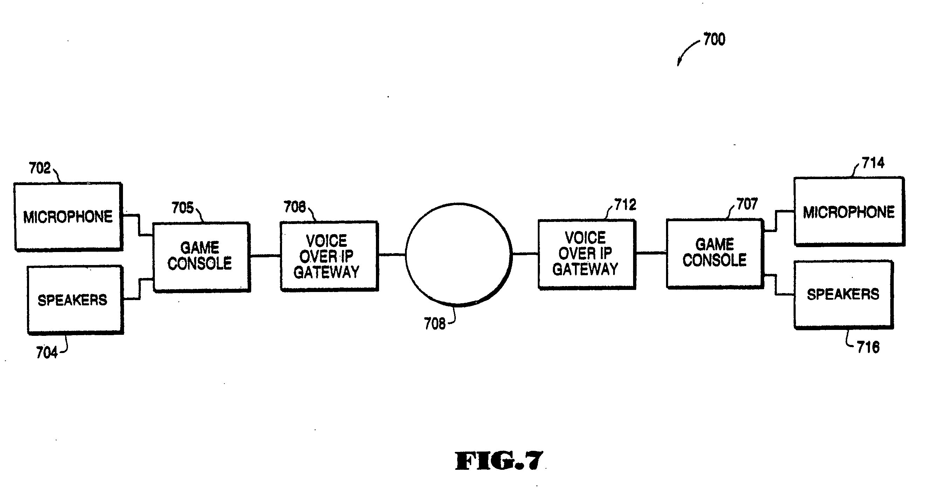

Figure 7 illustrates an example of a networked game system in which user game consoles communicate over a network,. For the networked game system 700, the network 708 comprises the Internet, and the first game console 705 is coupled to the second game console 707 through Voice over IP gateways 706 and 712. Each game console 705, 707 is attached to a speaker 704, 716, and microphone 702 and 714 set, respectively.

In Figure 6 and 7, the output voice characteristic depends upon information of each user operating each game console 705, 707. In this manner, each user can have a different voice assigned to his character or the game console. It is assumed that each user controls a character that is displayed on each game console, therefore, in this embodiment, each game console comprises user's location determination process. Thus, the characteristics of the character's voice can then be determined based on the location of the user to whom the character is related. For example, assuming each game console has a left and right pair of speakers, the output voice volume ratio of the speaker pair is changed based on the direction of the sender location. This provides some spatial effect of the voice relative to the location of the speaking character. The volume can also be changed based on the distance between the sender (the game console in the sender side) and the receiver (the game console in the receiver side). Alternatively, when a plurality of users is communicating with one another, each user's voice is assigned to each speaker based on their location.

The user location determination process is included in the voice conversion process as a means of altering the voice of a character played back on a user game console. In this user location determination process, the direction or/and distance between the sender and the receiver is calculated and the volume ratio of the left-right speaker pair is set based on the calculated data. In the case of surround-sound environment in which multiple speakers are coupled to a game console, the other speakers are also considered.

In one embodiment, location information for a plurality of players is determined by using address information for each of the players. Address information can be stored in a database provided in each game console.

The address or location information may be provided by using the telephone number for each player. In this case, the area code provides a rough approximation of a user's location relative to the other users. An address database related to telephone numbers is stored in the memory of each game console. A particular user's game console receives a sender's telephone number and the game console retrieves the location of the sender based on the telephone number. Based on the retrieved location data and the user's own location data, the game console of the receiver side calculates the direction or/and distance.

In an alternative embodiment, the location information can be provided using a personal database stored in each game console memory (e.g., secondary memory). For this case, each user has to input the other user's addresses in advance. Zip code information could be used to provide reasonable approximations of user locations. The information is stored in a memory location of the game console. When a connection between the game consoles of the users is established, ID information (e.g., user ID, telephone No., etc.) is sent to each user. Using the ID information, the user location is retrieved in each personal database and the direction and/or distance is calculated based on the user location.

Instead of storing user location information in each game console, the address information for a group of networked users can be stored in a central server, such as server 610 in Figure 6. In this case, the server stores the addresses or location information (zip code, area code, etc.) for all of the users in a database, and the direction and/or the distance are calculated based on the stored user information in the server. The server sends each calculated user direction and/or distance information for the other users. Each individual user game console then sets the volume ratio or whole volume based on the location information. For this embodiment, voice data is sent to each user through the server.

It should be noted that the process of altering the data in accordance with output voice characteristics can be implemented either in the server (data sending), the client computer, or a network server computer coupled to the server and client computer. Each computer capable of altering the transmitted data would have associated with it a voice or text conversion part, such as that illustrated in Figure 4. Such a conversion means could be implemented in hardware circuitry coupled to the computer, a software program executed by the computer, or a combination of dedicated hardware and software processes. Moreover, the database storing the various voice characteristics for each associated client or character within a client can be stored locally in each client computer or centrally in a database accessible to a server.

Depending upon where the alteration process of the output voice is performed, the steps of transmitting, altering, and receiving the content data can be done in various different step sequences. For example, the content data can be first transmitted from the server, altered in the server or other computer, and then received by the client. If the alteration process is performed by the client, the process can be performed by first transmitting the content data from the server to the client, receiving the data in the client, and then altering the content data in accordance with the specified output characteristics.

Besides game programs or other entertainment programs, the voice conversion process described in relation to Figures 6 and 7 can be used in various other applications involving speech content transmitted among a plurality of users. Examples include chat room applications, Internet telephony, and other similar applications.

In the foregoing, a system has been described for modifying transmitted content data based on user preferences. Although the present invention has been described with reference to specific exemplary embodiments, it will be evident that various modifications and changes may be made to these embodiments without departing from the broader spirit and scope of the invention as set forth in the claims. Accordingly, the specification and drawings are to be regarded in an illustrative rather than a restrictive sense.

## Claims

1. A method of modifying content data transmitted from a first computer (104) to a second computer (102) over a bi-directional communications network (110), said second computer (102) having an output mechanism for outputting content data, **characterized in**:
receiving an instruction of output characteristics of the output mechanism from the user of the first computer (104) or the user of the second computer (102);
generating, in the first computer (104), content data to be transmitted to the second computer (102), or, acquiring, in the first computer (104), the content data from external apparatus, and
modifying the content data in accordance with the instruction of output characteristics to produce modified content data, and outputting the modified content data to the bi-directional communication network (110).

2. The method according to claim 1, wherein the received content data to be modified comprises voice data which is input via a microphone coupled to the first computer (104), or a text data which is basic data for synthesized sound, and;
the content data comprises audio output data which is played back by an sound player connected to the second computer (102).

3. The method according to claim 2 wherein the content data output is the data for representing sound characteristics comprising voice of a predetermined character, the output characteristics comprising a parameter for representing at least one characteristics, which is defined by the system of the sound player, selected from the group consisting character gender, character condition, character environment, and language of the predetermined character, said parameter represents the characteristics via the audio output data.

4. The method according to claim 1 wherein a plurality of the output characteristics are stored in the memory coupled to the first computer (104), or stored in the memory coupled to the second computer (102), allowing the user of any one of the computer to select desired output characteristics from the stored output characteristics via a graphical user interface, whereby selected output characteristics is input to the first computer (104).

5. The method according to claim 3 wherein connecting the second computer (102) to the bi-directional communication network (110), and associating each user operating each second computer (102) with the character represented in the program executed on respective second computer (102), further, associating the character with the output characteristics for particular content data.

6. The method according to claim 5, previously determining a relative location of the character in an environment defined by the program, and modifying the output characteristics based on the relative location.

7. The method according to claim 6, each second computer (102) comprising a plurality of sound output apparatus, the output characteristics comprising the parameter representing a relative volume ratio of sound output from the sound output apparatus.

8. The method of claim 6 wherein the relative location information for each of the users is stored locally for each of the users.

9. The method of claim 6 wherein the relative location is determined by a relative physical location of each second computer (102) with respect to the bi-directional communication network (110).

10. A system coupling a two or more computers over a bi-directional network (110), and configured to modify content data transmitted from a computer over the bi-directional communications network (110), **characterized in that** the system comprising:
means for receiving an instruction of output characteristics associated with the content data from, among the two or more computers, the second computer (102) having output mechanism for the content data, said content data is output from the output mechanism of the second computer (102);
means (202, 312) for modifying the content data real-time in accordance with the instructed output characteristics, the content data is transmitted from a first computer (104) of the two or more computers to the second computer (102).

11. The system according to claim 10, wherein the content data comprises voice data input through a microphone coupled to the first computer (104), or the content data comprises a text data which is basic data for synthesized sound, wherein the modified content data comprising audio output data to be played back by sound player coupled to the second computer (102).

12. The system according to claim 10 wherein the audio output data is the data for representing sound characteristics comprising voice of a predetermined character, the output characteristics comprising a parameter for representing at least one characteristics, which is defined by the system of the sound player, selected from the group consisting character gender, character condition, character environment, and language of the predetermined character, said parameter represents the characteristics via the audio output data.

13. The system according to claim 10, wherein a plurality of second computer (102) is connected to the bi-directional communication network (110),
relative physical location between each second computer (102) and the user operating other second computer (102) in relation with said other second computer (102) can be uniquely determined
the information of each user is associated with the character represented by the program executed in the second computer (102),
the means (202, 312) for modifying data modifies the content of the audio output data depending upon the location of each character associated with each of the two or more users.

14. The system according to claim 13 wherein a plurality of sound player is connected to the second computer (102) to which the modified content data is output,
the means (202, 312) for modifying data modifies the audio output data for changing relative volume ratio of output from said plurality of sound player.

15. A server computer (104) interactively communicates over bi-directional communication network (110) with a client computer to which an output system for content data is coupled, **characterized in that** the system comprising:
instruction receiving means for receiving instruction of output characteristics of content data from the output mechanism in the client computer,
transmitting means for transmitting content data to the client computer over the bi-directional communication network (110);
means (202, 312) for modifying the content data for modifying the content data to be transmitted in accordance with the instructed output characteristics.

16. The server computer (104) according to claim 15, wherein:
the sound output mechanism is sound player,
the content data to be transmitted comprising text data, said text data is input via microphone, or said text data is basic data for synthesized sound,
the modified content data comprising audio output data for representing sound characteristics comprising voice of a predetermined character, said audio output data is to be played back by the sound player,
the output characteristics include a parameter for representing at least one characteristics, which is defined by the system of the sound player, selected from the group consisting character gender, character condition, character environment, and language of the predetermined character.

17. The server computer (104) according to claim 15 wherein the output mechanism comprising a game console (605, 607, 705, 707) and the sound player which plays back sound in relation with the game console (605, 607, 705, 707), said game console (605, 607, 705, 707) is operable for executing game program in which the character associated with the user operating the client computer, whereby interactive game environment is configured between the server computer (104) and the game console (605, 607, 705, 707).

18. The server computer (104) according to claim 17 comprising;
a game console (605, 607, 705, 707) and a sound player each having the function similar to the game console (605, 607, 705, 707) and the sound player both coupled to the client computer, wherein the game environment is configured by executing common game programs in the game console (605, 607, 705, 707) and the sound player.

19. The server computer (104) according to claim 18 wherein the output characteristics are associated with characteristics of behavior, said characteristics comprising language of the character appearing in the game software executed in the game console (605, 607, 705, 707) coupled to the client computer.

20. The server computer (104) according to claim 19, wherein;
a plurality of client computer is coupled to the bi-directional communication network (110), and the game console (605, 607, 705, 707) and the sound player is coupled to the client computer,
as to each client computer, relative physical location of the user operating the client computer can be uniquely determined,
the information of each user is associated with the character represented by the game program executed in the game console (605, 607, 705, 707),
the means (202, 312) for modifying data is adapted to detect each location of two or more character associated with user respectively, and modify the content of the audio output data based on the detected location.
